(19) Europäisches Patentamt
European Patent Office
Office européen des brevets

(11) **EP 4 360 791 A1**

(12) **EUROPEAN PATENT APPLICATION**

(43) Date of publication:
**01.05.2024 Bulletin 2024/18**

(21) Application number: **22204608.8**

(22) Date of filing: **31.10.2022**

(51) International Patent Classification (IPC):
**B23H 1/02** $^{(2006.01)}$

(52) Cooperative Patent Classification (CPC):
**B23H 1/022**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Agie Charmilles SA**
**6616 Losone (CH)**

(72) Inventor: **Boccadoro, Marco**
**6653 Verscio (CH)**

(74) Representative: **Li Schrag, Yue**
**Georg Fischer AG**
**Amsler-Laffon-Strasse 9**
**8201 Schaffhausen (CH)**

(54) **METHOD AND MACHINE TOOL FOR ELECTRICAL DISCHARGE MACHINING**

(57) The invention relates to a method for electrical discharge machining (EDM) a workpiece by means of a train of machining pulses. During the machining time the machining pulses are applied to the working gap between workpiece and electrode. An open voltage is first applied, the ignition delay time $t_d$ is measured, then, at the beginning of the discharge, its fall time $t_f$ is measured, and certain shape features (e.g. the pedestal and ramp) of the pulse are adapted in real time for the very same discharge, as a function of said ignition delay time and/or fall time. Moreover, instead of shaping the very same discharge, one or more subsequent discharges can be shaped as a function of $t_d$ and/or $t_f$ of a single discharge, or of an average of $t_d$ and/or $t_f$ over several discharges.

Figure 1a

Figure 1b

Figure 1c

EP 4 360 791 A1

**Description**

The invention relates to a method for electrical discharge machining (EDM) of a workpiece by a tool electrode.

Background

In EDM a train of machining pulses is applied to the working gap between workpiece and electrode, whereby the workpiece is machined. To monitor the process, the voltage and current profile across the working gap with time is sensed. From the pulse voltage profile of the voltage applied to the working gap at the time, characteristic values are derived, such as ignition delay time, average pulse voltage, etc. In particular, the measured ignition delay time can be used to control the interelectrode distance, or gap width, since it is known that the ignition delay is proportional to the gap width, i.e. as disclosed in DE 22 50 872. The measured ignition delay time $t_d$ is compared to a corresponding reference value $t_{dref}$, and their difference is used to control the axes position and thus the interelectrode gap width.

One problem of the EDM process is that the tool electrode is prone to wear. As far as the current pulses are concerned, it is known from the state of the art to apply stepped shapes or trapezoidal shapes, in order to reduce the tool electrode wear (e.g. de Bruyn, H.E. (1967). "Slope control: A great improvement in spark erosion". CIRP Annals, 16(2), pp.183-191) .

The problem of the known method, which apply a slope at the beginning of the current pulse to achieve a low wear, is that the material removal rate (MRR) is reduced. Moreover, if the initial current pedestal is too small, the initial energy will not be sufficient to sustain a stable plasma column and a discharge, causing a sequence of pulse interruptions and reignitions, increasing the tool electrode wear.

Summary of the invention

It is an objective of this invention to provide a method to simultaneously achieve a high material removal rate (MRR) and low electrode wear.

According to the present invention, these objectives are achieved through the features of independent claims. Further advantageous embodiments follow from the dependent claims and the description.

The present invention is related to a method for electrical discharge machining of a workpiece by a tool electrode, wherein a plurality of discrete electrical discharge machining pulses are applied to a gap between the work piece and the tool electrode.

The method comprises the following steps:

- an open voltage $U_o$ is applied between the electrode and the work piece to induce a discharge;
- a gap voltage $U_{Gap}$ is measured;

- at least one time parameter related to the gap voltage is computed;
- shape characteristics of a current pulse is determined based on the determined at least one time parameter; and
- the current pulse is generated according to the determined shape characteristics and applied to the electrode.

The object of the present invention is to reduce the tool electrode wear by at the same time, having a high material removal rate (MRR). The invention achieves this object by adapting the current pulse in real time, more specifically by adapting the current pulse shape in dependency of the time parameters of the measured gap voltage. The current pulse shape is not defined in advance before starting the machining, but is adaptively defined during the machining. As known, electrical discharge machining is a stochastic process, thus each discharge process can be different. The method of the present invention provides the advantage that the shape of each individual machining pulse can be adjusted in real time based on the actual gap conditions. Moreover, since the current pulse applied directly influences the tool wear and the material removal rate, adjusting the current pulse shape in consideration of the actual gap conditions can optimize both, the tool wear and the material removal rate.

At the beginning of the machining pulse, an open voltage $U_o$ is applied between the electrode and the work piece to induce a discharge. When the discharge channel is formed, the machining current pulse is applied for the machining of the workpiece. The current pulse is critical concerning the shape and the amplitude. The voltage across the gap is continuously measured during the machining and compared with threshold voltages to monitor and to control the electrical discharge machining process. Therefore, certain characteristic time parameters related to the measured voltage pulse can be determined. These time parameters are important indicators, e.g. for the gap width, for the condition of the gap, for the timing of applying the current pulse and the amplitude of the current pulse to be applied.

In particular, the time parameter related to the sensed voltage pulse is an ignition delay time $t_d$ or a voltage fall time $t_f$ or both. The time parameter reflects the actual gap condition. According to the invention, the time parameter is used as wear indicator.

The ignition delay time $t_d$ and the fall time $t_f$ can be computed in known manner, e.g. as disclosed in the Dirk Dauw, dissertation KU Leuven, "On line identification and Optimization of electro-discharge machining", 1985 (chapter 2.2.) .

The open voltage $U_o$ is applied to start the actual pulse. From the passing of a threshold at the rising voltage it is derived that the no-load voltage has been reached. The discharge occurs with a time delay called as ignition delay time $t_d$. After the ignition, the gap voltage falls sharply from the open voltage $U_o$ to the erosion voltage $U_e$. In practice, the fall time $t_f$ is computed by determining the time interval when the sensed gap voltage falls from a first threshold voltage to a second threshold voltage value.

In a preferred variant, the ignition delay time is determined and used to determine the shape characteristics to be applied for the present current pulse. The ignition delay time, or, a derived value can be used to control the interelectrode distance or gap, since it is proportional to gap width. The ignition delay time is normally available for the servo control of the machine tool. Thus, using the ignition delay time as time parameter to define the shape of the current pulse doesn't require additional measurement and calculation.

In another variant, the fall time $t_f$ is determined and used to determine the shape characteristics of the present current pulse.

In a further variant, both, the ignition delay time $t_d$ and the fall time $t_f$ are determined and used to determine the shape characteristics of the present current pulse.

In order to ease the implementation of the method, a plurality of predefined shape characteristics are stored in a memory. The suitable shape characteristics of the current pulses for the determined time parameter can be selected from the memory. Moreover, a fast selection of the shape characteristics from the memory is preferred to enable to apply the current pulse in real time. This is achieved e.g. by normalization of the time parameter. The normalization enables to convert the time into a number, which can be used as a pointer to quickly access the stored shape characteristics of the current pulses. A suitable reference for the normalization of the ignition delay is the pulse duration $t_i$. The fall time $t_f$ is very short, some tenth of nanoseconds, so that pulse duration $t_i$ is not ideal to be applied for normalization. The fall time is preferably normalized with reference to a reference timeframe $T_{ff}$, which is sized to include the range of the time parameter, e.g. the fall times.

Thus, in a variant, the determined time parameter is normalized with reference to the pulse duration $t_i$ or with reference to a reference timeframe $T_{ff}$. The normalized value of the time parameter is used as a pointer to the memory location that contains the suitable shape characteristics of the current pulse. The current pulse is generated according to the corresponding shape characteristics determined based on the normalized value of the time parameter and applied to the tool electrode.

In one variant, the normalized ignition delay time $t_{d\%}$ (e.g. $t_d/t_i$) is computed and used to determine the shape characteristics of the current pulses.

In a variant, the normalized fall time $t_{fn}$ (e.g. $t_f/T_{ff}$) is computed and used to determine the shape characteristics of the current pulses. For instance, the fall time $t_f$ is normalized using to a reference timeframe $T_{ff}$. The timeframe $T_{ff}$ has a total length $L_{Tff}$ and can be divided into a plurality of fields $N_{Tff}$. Each of the field has a time range of $L_{Tff}/N_{Tff}$. For example, the timeframe has a total length of 400ns and is divided into 40 fields, so that each field has a time range of 10ns ($L_{Tff}/N_{Tff}$=400ns/40=10ns). The present fall time $t_f$ is then assigned to a field which serves as a pointer to the memory location that contains the suitable shape characteristics of the current pulse.

In a further variant, a combination of the normalized values of two time parameters, in particular the combination of the normalized ignition delay time $t_{d\%}$ and the normalized fall time $t_{f100}$ is used as a pointer to a memory location that contains the shape characteristics of the current pulse.

A lookup table including the normalized values of the time parameters and the corresponding shape characteristics can be stored in the control unit of the machine tool, or more preferably, in the generator control itself, in order to provide the real time pulse shaping with minimum delay.

The shape characteristics controlled in real time include one or more features of the current pulse shape. According to the present invention, the most important of the current pulse features which are adapted to the gap conditions based on the time parameters of the gap voltage is the steepness of the rising flank of the current pulse, in particular the rising from an initial current level to the desired pulse current amplitude $I_e$. Another important pulse feature is the current pedestal $I_{ped}$, i.e. the initial machining current which can be controlled in the same way, pulsewise.

The shape characteristics is preferably determined by means of experiments. Different shape characteristics are applied to machine a workpiece and machining results including one or more of the electrode wear, the material removal rate, the surface roughness, and the recast layer thickness are measured. Based on these experimental data, the lookup table is generated. Specific machining conditions including the shape characteristics and the measured machining results achieved with said conditions can be used to train an algorithm by which the shape characteristics for new machining condition are determined. Machine learning may be thus be used to identify suitable discharge current shape characteristics, to be stored e.g. in the look-up table.

Normally, two power generators, or generator modules are included in the machine tool. The first power generator is turned on to apply the open voltage and to generate the ignition. For example, the first power generator is a high-voltage power generator providing an open voltage which typically is in the range of 80V to 300V. After the ignition, a second power generator is turned on to apply the machining current pulse for erosion. For example, the second power generator is a current generator.

As said, an embodiment of the invention may use the fall time $t_f$, respectively the normalized value to determine the shape characteristics to be applied for the present current pulses. However, calculating the fall time $t_f$ needs time, e.g. a computation time $t_{comp}$ 200nS. During this time, a current $I_o$ is preferred to be applied to the gap to avoid the extinction of the discharge channel.

Therefore, in a preferred variant, a defined auxiliary current $I_o$ is issued by the first generator and said auxiliary current is issued at least until the current pulse is switched on, preferably during the whole pulse.

According to a preferred embodiment of the invention, an average value of the time parameter of a plurality of voltage pulses is computed and used to determine the shape characteristics of the current pulse, and the determined shape characteristics is applied for a group of subsequent machining discharge pulses. For example, the ignition delay time of a succession of 20 voltage pulses are used to determine an average ignition delay time $t_{d\_avg}$, and said average ignition delay time or a normalized value thereof is used for the determination of the shape characteristics which apply to e.g. the subsequent 20 current pulses. In this case, the shape characteristics of the subsequent 20 current pulses are same. Nevertheless, the process is continuously monitored to identify e.g. short pulses.

Although this variant is less reactive than the one in which the current pulse shape is adjusted pulsewise, it is still advantageous and effective. This is due to the fact that the discharge conditions are related to the gap width, and that the effective gap width can only be adjusted comparably slowly compared to the discharge pulse parameters. For this reason such procedure is considered as a real-time procedure.

Depending on the application, priority of the technological result may vary. In order to enhance the flexibility of the method, the memory includes a set of look-up tables, in which the shape characteristics of the current pulse is stored. The look-up table is selected according to the priority of the technological results, in particular low electrode tool wear, and high material removal rate. For example, for producing the microconnectors using EDM, the wear has dramatically negative impact on the quality of the produced part, e.g. the shape and reliable plugging of the microconnector, thus low wear has a high priority for this application. However, for drilling a hole using EDM, the wear is less important than the material removal rate.

It is known that the wear is mainly caused at the beginning when the current pulse is applied. According to the invention, to ensure both requirements of low wear and high material removal rate, the current impulses are adaptively shaped in real time, in consideration of the actual discharge condition, which is represented by the observed time parameter $t_{d\%}$ and/or $t_{f100}$.

In one variant, the shape characteristics of the current pulse include a first shape feature and a second shape feature, the first shape feature is a pedestal of the current pulse and the second shape feature is a ramp of the current pulse. Here, the shape of the current pulse is substantially defined by the shape features $I_{ped}$ and $dI_{ramp}$.

In one variant, the first shape feature is configured to maintain the discharge and the second shape feature is configured to optimise the material removal rate and tool wear.

The current ramp can be defined by indicating an increment $dI_{ramp}$ per unit time dt, where the current rises from $I_{ped}$ to $I_e$ with a gradient $dI_{ramp}/dt$. Alternatively, the rising time $t_{ramp}$ in which the current rises from $I_{ped}$ to $I_e$ can be indicated to define the steepness of the current slope. Here the look-up table comprises the values of the rising time $t_{ramp}$ instead of the increments $dI_{ramp}$.

The ignition delay time $t_d$ is measured as soon as a gap voltage drops below a threshold voltage level, then the fall time $t_f$ is measured, and the pedestal and the ramp of the current pulse is adapted in real time for the very same discharge as a function of the ignition delay time and/or the fall time.

For sake of simplicity the disclosed invention mentions pedestal and ramp of a trapezoid, but several other shapes are applicable, such as e.g. triangular, provided they reduce the tool electrode wear. The current pulse shapes comprise a rising flank with varying steepness. Moreover, the current may vary linearly, stepwise, or in any other way.

The method of the present invention can be applied to other electrical discharge machining methods, such as wire EDM and fast wire EDM (i.e. high-speed reciprocating wire EDM). In particular, the method of the present invention can be applied to wire EDM for trim cuts. In the case of fast wire EDM, the wire travels back and forth and thus is used several times. Here it is particularly important to achieve high cutting rate and to preserve the electrode, because the autonomy of the machine is determined by the electrode wire wearing. Here the method can be used for all cuts.

The inventive idea of adapting a pulse shape feature (e.g. pedestal and ramp) as a function of a time parameter can be applied for an individual pulse, i.e. the present current pulse, and/or for a plurality N of following current pulses. Moreover it is possible to compute averages of $t_d$ and/or $t_f$ over several pulses, retrieve the pulse shape based on said averages $t_{d\_avg}$ and/or $t_{f\_avg}$ and apply the retrieved pulse shape parameters to the present and following N pulses, to be synchronized with the comparably slow movements of the machine head.

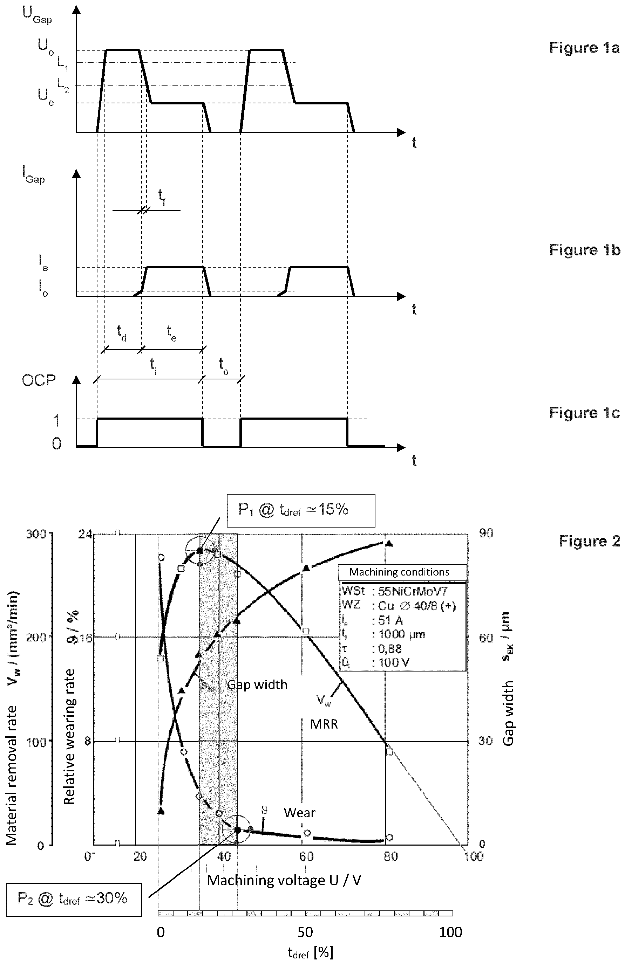

As illustrated in Fig. 2, one sees that the process workpoint (on the horizontal coordinate axis) is a tradeoff between very low wear and high MRR. The disclosed inventive method improves greatly the process performance, by adjusting this workpoint in real time, for each pulse. A set of look-up tables is therefore preferably used, to continuously optimize the combination of low wear and high MRR, according to the desired result priority (e.g. extremely low wear).

The best combination of shape features such as current pedestal and current ramp in terms of low tool electrode wear and high MRR is advantageously found by repeating a given erosion test, collecting the current pulse settings (shape features $I_{ped}$ and $dI_{ramp}$) and the

resulting electrode wear and material removal rate, and by applying methods of artificial intelligence known in the art, such as Bayesian optimization or similar.

Thus, in one variant, the shape features included in the look-up tables are optimized in advance by iterative erosion tests. For instance, suitable combinations of the pedestal current and the current ramp are determined by executing a number of erosion tests in which the set pulse shape features are collected together with the resulting tool wearing and the material removal rate. In further, the shape features can be optimized by utilizing tools of artificial intelligence.

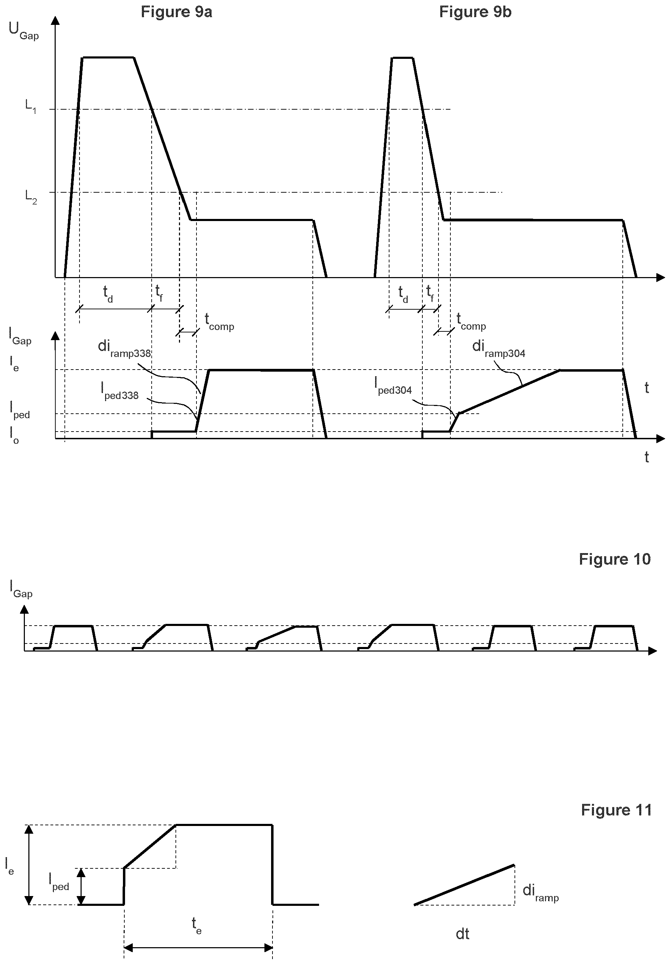

During the erosion process there are essentially front discharges and side discharges. The latter must be limited, since they enlarge the side gap and reduce the machining accuracy. Since the side gap is however always larger than the front gap, side discharges are characterized by a higher average erosion voltage $U_{e\_avg}$ and a quite longer average ignition delay $t_{d\_side}$. The longer ignition delay has hence a double meaning: the current discharge is either a side discharge or a low wear front discharge, which could trigger a more energetic current pulse shape (e.g. as depicted in Fig. 9a) according to the inventive method.

This kind of current pulse shape is beneficial for front discharges to increase the MRR, but undesired for side ones, since it would enlarge the side gap.

Therefore, according to a further embodiment, the inventive method is adapted to limit the side discharges using one or more of the variants explained hereafter.

- by adapting the generator power supply voltage $U_{HPS}$ in order to be just slightly higher than the erosion voltage $U_{e\_front}$ of the front discharges, but lower than the erosion voltage of the side discharges;
- by cutting off the pulses having a delay time which is longer than a set reference ignition delay $t_{dref\_side}$;
- by issuing a dedicated current pulse (exemplarily less energetic) for discharges having a delay time longer than a set reference ignition delay $t_{dref\_side}$.

The first variant is disclosed in EP 2 848 349 which is incorporated by reference in the present application. In the second variant, the machining pulses having a delay time which is longer than a set reference ignition delay $t_{dref\_side}$ are cut off. In the third variant, a dedicated current pulse (exemplarily less energetic) is issued for discharges longer than a set reference ignition delay $t_{dref\_side}$.

According to the present invention, a machine tool for electrical discharge machining of a workpiece by a tool electrode includes a power generator and a control unit. A plurality of discrete electrical discharge machining pulses are applied to a gap between the work piece and the tool electrode. An open voltage $U_o$ is generated by the power generator and applied between the electrode and the work piece to induce a discharge. A gap voltage $U_{Gap}$ is measured. At least one time parameter related to the gap voltage is computed by the control unit and, a shape characteristics of a current pulse is determined based on the determined at least one time parameter by the control unit. The current pulse is generated according to the determined shape characteristics and applied to the tool electrode.

Detected description and preferred embodiments

Detailed description and preferred embodiments

Preferred embodiments of the invention will now be detailed with reference to the attached drawings, in which

FIG. 1    is a schematic plot of a typical gap voltage, machining current pulse and oscillator clock pulse;

FIG. 2    is a graph illustrating MRR, relative tool wear, and gap width as a function of the reference ignition delay $t_{dref}$ in percent of the total pulse duration $t_i$, as known in the art;

FIG. 3    is a graph illustrating the dependency of the tool electrode wear on the fall time $t_f$, as known in the art;

Fig. 4    is a graph illustrating the dependency of the relative tool electrode wear on the reference ignition delay $t_{dref}$, as known in the art;

FIG. 5a    is a schematic plot of a voltage pulse with a small tool electrode wear;

FIG. 5b    is a schematic plot of a voltage pulse with a big tool electrode wear;

Fig. 6    is a schematic plot of the gap voltage, the corresponding current pulse and a $t_{d\%}$-look-up table according to a first embodiment of the invention;

Fig. 7    is a schematic plot of the gap voltage, the corresponding current pulse and a $t_f$-look-up table according to a second embodiment of the invention;

Fig. 8    is a schematic plot of the gap voltage, the corresponding current pulse and a $t_d+t_f$-look-up table according to a third embodiment of the invention;

Fig. 9a    is a schematic plot of the gap voltage with potentially low tool erosion wear and the corresponding current pulse according to an embodiment of the invention;

Fig. 9b    is a schematic plot of the gap voltage with potentially high tool erosion wear and the corresponding current pulse according to an embodiment of the invention;

Fig. 10    is a schematic plot of a current pulse with characteristic shape features;

Fig. 11    is a schematic plot of a sequence of current pulses with varying pulse shape;

Fig. 12a to 12f is a schematic plot of exemplary erosion current pulses with various wear limiting shapes;

First, referring to Fig. 1a and 1b there is illustrated the gap voltage and current profile of an ideal machining pulse as a function of time in a known die-sinking electrical discharge machine, with an anodic-poled machining electrode. Figure 1c depicts the oscillator clock signal OCP controlling the pulse duration $t_i$ of the machining pulses and the pulse pause $t_0$ between two pulses.

To initiate the discharge channel, an open voltage is applied to the gap between the tool electrode and the workpiece. The ignition occurs after an ignition delay time $t_d$. With the ignition, the gap voltage falls from the value of the open voltage $U_0$ with a variable slope, during a fall time $t_f$, to a discharge voltage $U_e$. It is possible that a small current $I_0$ flows also during the fall time $t_f$, which is illustrated in the figure 1b showing the current flowing across the gap.

The material removal occurs during the discharge time $t_e$, whereas the tool electrode wear occurs at the beginning of this time interval. During the ignition delay time $t_d$ and in the pause time $t_0$ no machining current flows and there is practically no material removal.

The main object of the present invention is to reduce the tool electrode wear to the maximum to ensure a high copy precision and at the same time to achieve a high MRR.

Figure 2 is taken from Fritz Klocke and Wilfried Konig, "Abtragen, Generieren, Laser-materialbearbeitung", Springer Verlag, 4th edition, 1997, figure 2.20. This figure illustrates the gap width and technological parameters as a function of the machining voltage, and is complemented with a scale of the reference ignition delay $t_{dref[\%]}$ and with the labels P1 and P2, as discussed here below. The curves illustrate the tool wear and the material removal rate in relation to $t_{dref}$. The reference ignition delay $t_{dref}$ presents the percentage of the desired ignition delay time $t_{dref}$ to pulse duration $t_i$. For this machining regime, the point P1 with the maximum MRR is found with a $t_{dref}$ of about 15%, whereas the tool electrode wear increases sharply for values of $t_{dref}$ smaller than 30%. The reference ignition delay $t_{dref}$ is the imposed setpoint value for ignition delay $t_d$, i.e. the actual $t_d$ is kept equal to $t_{dref}$ by the servo control loop.

One sees that either the machining is carried out around the point P1, thus maximizing the MRR, or around the point P2, thus obtaining a small tool wear, or in a work point in between, representing a trade-off between MRR and tool wear.

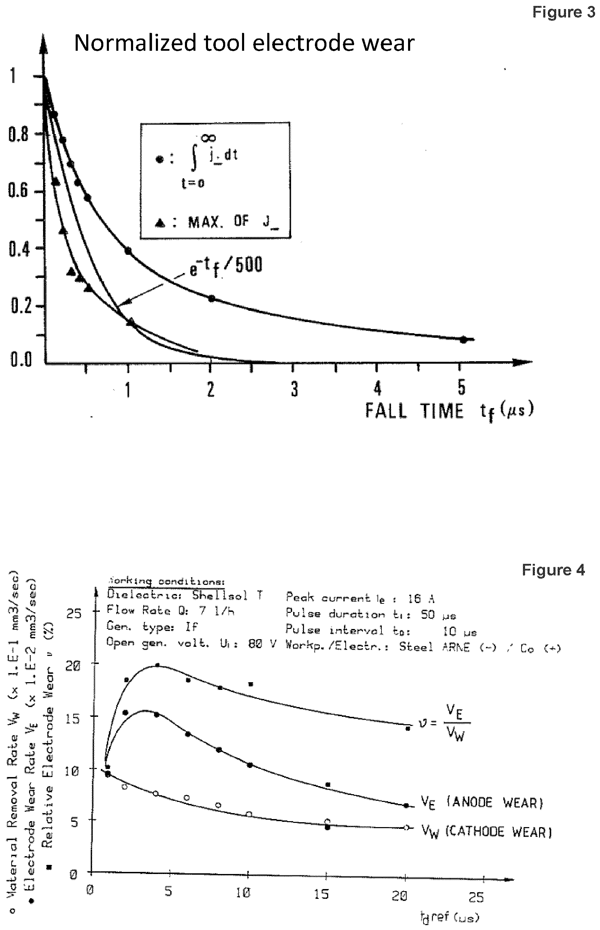

Figure 3 illustrates the dependency of the tool electrode wear on the fall time $t_f$, as known in the art. This figure 3 is published by Dirk Dauw, dissertation KU Leuven, "On line identification and Optimization of electro-discharge machining", 1985, as figure 3-28.

Figure 4 is published as figure 1-10 in the same dissertation, and illustrates the dependency of the relative tool electrode wear on the reference ignition delay $t_{dref}$.

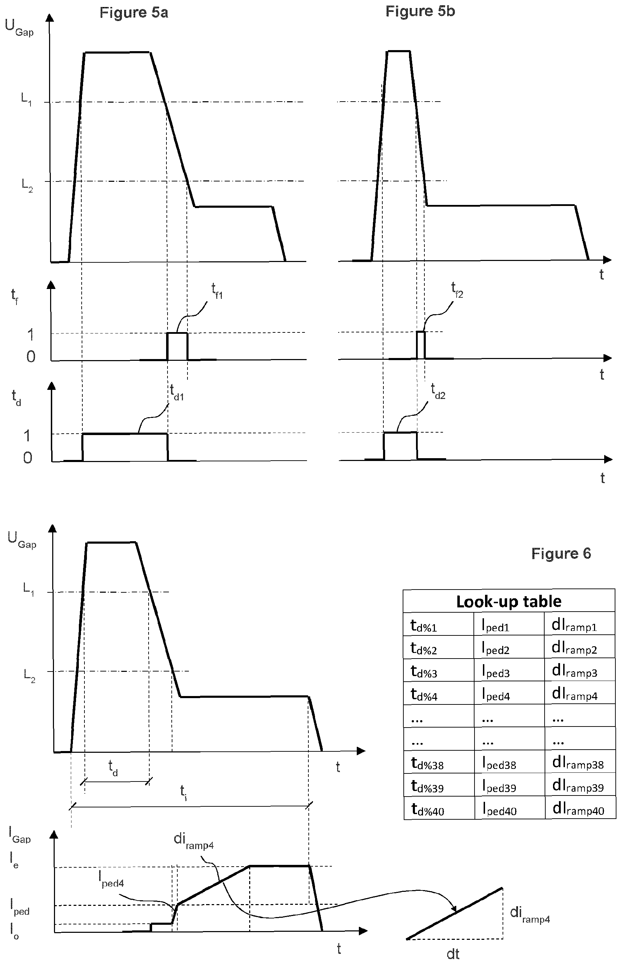

Figures 5a and 5b illustrate the two main wear indicators of an EDM machining pulse:

- the fall time $t_{f1}$ and $t_{f2}$; and
- the ignition delay time $t_{d1}$ and $t_{d2}$,

respectively for a high wear (5a) and a low wear (5b) ideal machining pulse.

In this example the fall time $t_f$ defines the time interval when the gap voltage falls from a first threshold voltage $L_1$ to a second threshold voltage $L_2$, and the ignition delay time $t_d$ defines the time interval between the crossing of a first threshold voltage $L_1$ by the rising flank of the gap voltage and falling below the threshold voltage $L_1$ by the falling flank of the gap voltage.

A small or missing ignition delay means that the gap is still ionized, therefore the next discharge is going to occur at the same spot, or very near to the preceding discharge, causing in this way a localized high tool electrode wear. As said, the tool electrode wear occurs at the beginning of the discharge, by the electronic current.

Another discharge pulse parameter that influences the electrode wear is the fall time $t_f$, since it correlates with the electron current density. The shorter the fall time is, the higher the current density is. Consequently, the tool electrode wear is higher with a shorter fall time than a longer fall time.

The method of the present invention provides the possibility to use one or both of these two indicators to predict the electrode wear caused by the present discharge, and to adapt the current pulse shape to optimize the tool wear and the material removal rate.

The current pulse shape is adapted in real time as a function of the time parameter $t_d$ and/or $t_f$ featured by the gap voltage, whereas the pulse shape features are retrieved from a fast memory to generate the present current pulse accordingly. These pulse shape features are illustrated exemplarily in figure 11. The auxiliary current $I_0$ is omitted for clarity. One feature is $I_{ped}$ which defines the pedestal current to be set at the beginning of the discharge current pulse. The second pulse shape feature is the current slope which is set after $I_{ped}$ based on $dI_{ramp}$. Additional current pulse shape features may be specified and stored to get particular current pulse shapes, featuring e.g. additional slopes, steps, peaks, etc.

The slope of the current pulse can be defined as an increment $dI_{ramp}$ of current per time unit dt, with a suitable predefined time unit dt. Alternatively the slope can be indicated as the current rising time, that is, the time between the reaching of the pedestal current and the reaching of the machining current $I_e$.

Figure 9a shows a voltage pulse with a comparably long ignition delay time, and comparably long fall time. A suitable current pulse shape is quasi rectangular, providing high MRR. In contrast, figure 9b shows a voltage pulse with a short ignition delay time and steep falling flank. Here, a suitable current pulse comprises a pedestal current followed by current slope. Figure 10 shows a sequence of current pulses, where the pulse shape is adapted in real time, pulsewise in consideration of the determined time parameters.

In some embodiments disclosed hereafter, during the ignition time and right thereafter, the generator issues a small auxiliary current $I_0$. This current is very small during the ignition delay and is illustrated in figures 9a and 9b, during the fall time, before the switching of the machining current. For simplicity the current $I_0$ is represented as a small current step. This current $I_0$ is preferably applied to overcome the small gap conductivity, and to give time to the generator to prepare the main current pulse. The inventive method requires a $t_d$ and/or $t_f$ computation, preferably for each machining pulse.

These computations can be done in a computation time $t_c$ of a few hundreds of ns, e.g. in a fast programmable gate array (FPGA). Nevertheless one must avoid that the discharge turns off and the plasma channel collapses, else a phase of instability would be triggered, where high frequency voltage and current spikes would enter an oscillation, causing a high wear. So, a minimal current is preferred to be sustained over the whole pulse.

Figure 6 shows a first embodiment of the present invention. The method includes the following steps:

- for at least one, preferably every single erosion pulse the ignition delay time $t_d$ is determined;
- the percent value of the ignition delay time $t_d$ referred to the pulse duration $t_i$ is computed, yielding the ignition delay $t_{d\%}$ ($t_{d\%1}$ to $t_{d\%40}$) ;
- the resulting value is used as a pointer in a look-up table, which is schematically illustrated in figure 6;
- the pulse shape features, e.g. a pedestal and ramp value for the current pulse are taken from a look-up table; and
- the generator issues the current pulse accordingly.

As shown in the figure 6, the current pulse applied to the electrode features the auxiliary current $I_0$, a pedestal current $I_{ped4}$ and a current ramp $dI_{ramp4}$ at the beginning of the pulse. The auxiliary current serves to maintain the discharge channel after breakdown, until the machining current $I_e$ is initiated. The pedestal current is to get a stable discharge condition as quick as possible. Following the current pedestal, the ramp serves to modulate the current density at the beginning of the current pulse, to keep the material removal rate high and the tool wear low, as the wear is especially caused at the beginning of the discharge by high current density.

Figure 6 shows an example of 40 different values of shape characteristics of the current pulses stored in the look-up table, but the number of the values of shape characteristics is not limited. If the ignition delay has a normalized value of $t_{d\%1}$, the values of $I_{ped1}$ and $dI_{ramp1}$ are used to generate the current pulses. If the ignition delay has a normalized value of $t_{d\%37}$, the values of $I_{ped37}$ and $dI_{ramp37}$ are used to generate the current pulse for this pulse.

For example, using the ignition delay time, the current shape is formed and applied as follows: the open voltage is applied to the gap and the ignition delay time is determined and normalized with reference to the duration of the set oscillator clock pulse which corresponds to the pulse duration $t_i$. The normalized ignition delay time is used to determine the current pulse features from a look-up table as the one shown in figure 6. $I_{ped4}$ defines the pedestal current of the machining pulse, and $dI_{ramp4}$ defines the steepness of the following current ramp. By way of example, $dI_{ramp}$ is defined as the increment of current per time unit dt, e.g. dt = 20 ns.

In an exemplary embodiment, $dI_{ramp}$ represents the multiplier of 20ns units to increment the ramp current by 100 mA. In other words, to have a ramp of 0.1A/$\mu$s, or 0.1A /1000ns, the multiplier is $dI_{ramp}$=1000ns/20ns=50, meaning one increment of 0.1A every 20ns*50= 1$\mu$s. The auxiliary current $I_0$ is applied immediately at the detection of the breakdown. The pedestal current $I_{ped}$ is applied as soon as the current pulse features are determined based on the look-up table. The current rises sharply from the auxiliary current $I_0$ to the value of the pedestal current $I_{ped4}$. Then, the current rises further from $I_{ped4}$, with a steepness $dI_{ramp4}$/dt, to the desired machining current $I_e$ which is maintained up to the end of the pulse.

Preferably, the time parameters of the present voltage pulse are used to determine the shape characteristics for the present current pulse only. Alternatively, the time parameters $t_d$ and/or $t_f$ of a plurality of machining impulses are averaged and/or these values are used to determine the shape characteristics for a present and a plurality of successive the current pulses.

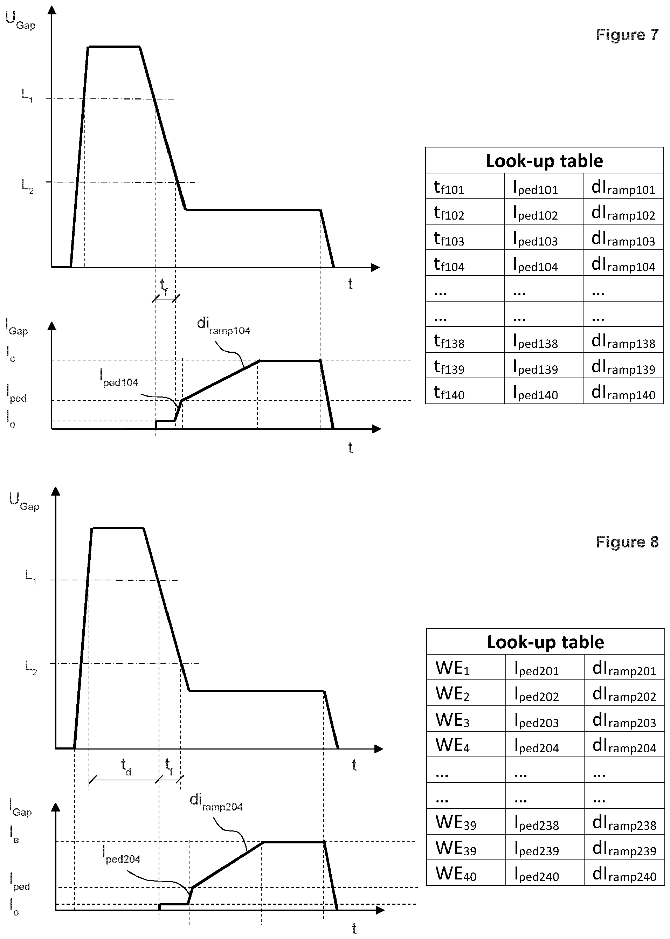

Figure 7 illustrates a second embodiment of the present invention, which includes the following steps:

- for every single erosion pulse the fall time $t_f$ is measured;
- the measured value is normalized, e.g. by rounding to 100 ns units, yielding $t_{f100}$ ($t_{f101}$ to $t_{f140}$);
- the resulting value is used as a pointer in a look-up table, which is schematically illustrated in figure 7;
- the pulse shape features, e.g. a pedestal and ramp value for the current pulse are taken from the look-up table;
- the generator issues the current pulse accordingly.

As shown in the figure 7, the current pulse applied to the electrode features an auxiliary current $I_0$, a pedestal value $I_{ped104}$ and a current ramp $dI_{ramp104}$.

For example, using the fall time $t_f$ of the gap voltage, the current shape is formed and applied as follows: the open voltage is applied to the gap and the fall time is determined and rounded. The rounded fall time, e.g. $t_{f104}$ is used to determine the current pulse features from a look-up table which comprises for instance 40 different values of shape characteristics of the current pulses, as the one shown in figure 7. $I_{ped104}$ defines the pedestal current to be applied, and $dI_{ramp104}$ defines the steepness of the following current ramp. The current is applied in the same way as discussed with reference to figure 6.

Fig. 8 illustrates a third embodiment, in which a combination of both time parameters of the gap voltage are used to determine the current pulse shape characteristics, where following steps are carried out:

- For every single erosion pulse the ignition delay time $t_d$ and the fall time $t_f$ are measured and normalized, yielding the ignition delay time $t_{d\%}$ and the fall time $t_{f100}$;
- A wear evaluation function is created, exemplarily similar to:

$$WE_n = k1*(100-t_{d\%}) + k2*t_{f100}$$

 Where k1 and k2 are fitting coefficients found by application tests;
- $WE_n$ is an index to a look-up table that yields the pulse shape characteristics, e.g. a pedestal and ramp value in consideration of the normalized delay time $t_{d\%}$ and fall time $t_{f100}$;
- The pulse generator outputs a current shape accordingly.

For example, using the ignition delay time $t_d$ and the fall time $t_f$ of the gap voltage, the current shape is formed and applied as follows: the open voltage is applied to the gap and the ignition delay time $t_d$ is determined and normalized e.g. as described with reference to the first embodiment. Moreover, the fall time $t_f$ is determined and rounded, e.g. as described with reference to the second embodiment. The wear evaluation function including the normalized ignition delay time $t_{d\%}$ and the fall time $t_{f100}$ of the gap voltage is computed. The output of the wear evaluation function, e.g. $WE_3$ is used as a pointer to determine the current pulse features from the look-up table of figure 8. The current features are applied in the same way as for the case of the first and second embodiment.

These steps can be implemented using fast electronics in order to react within few hundreds of nanoseconds.

The pulse features are advantageously precomputed and stored in a fast memory, e.g. used as a look-up table. During this computation time, the current $I_0$ is applied to avoid the discharge extinction.

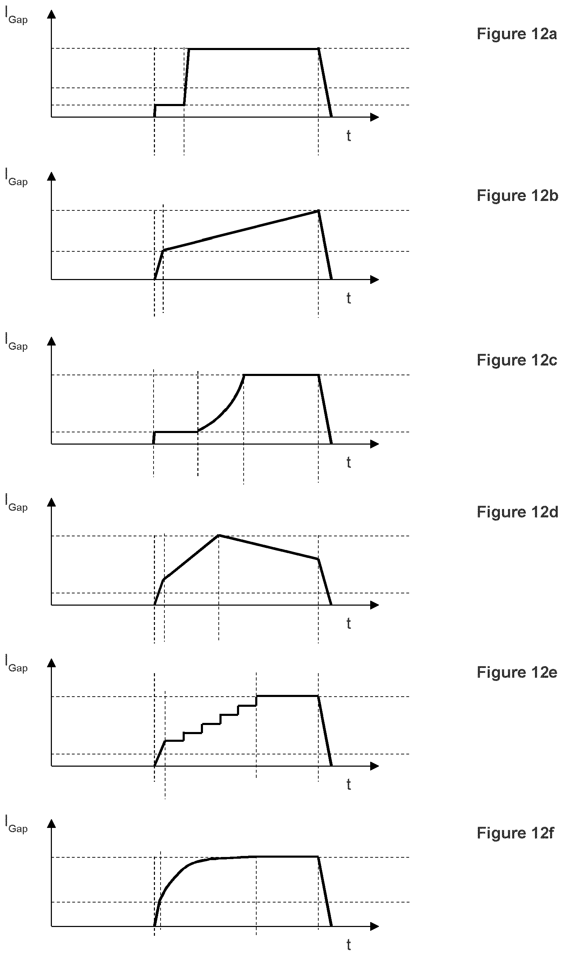

The current pulse shape is not limited to the variants outlined above. Figures 12a-12f shows several examples of current pulses with other shapes, which can be applied to the tool electrode. The number of the pulse shape features is not limited to one or two; the current pulse shape may be defined by an arbitrary number of features, however this number should be limited to limit the complexity. In particular, the current pulses features a pedestal at the beginning of the current pulse and a current ramp. Figure 12a shows a current pulse having the auxiliary current followed by the pedestal and current ramp rising with the same steepness. Such pulse is very effective in terms of MRR, but could be undesirable in terms of electrode wear. Figure 12b shows a current pulse with a pedestal and a ramp having a moderate slope. Figure 12c shows a variant that the current pulse has no pedestal, but an initial current followed by a rising current profile and a phase in which the machining current is maintained till the switch off. Figure 12d shows the example of applying a rising flank followed by a falling flank. Figure 12e shows a current pulse in which the slope is obtained by stepwise increase the current. Figure 12f shows a current pulse featuring a pedestal current followed by a rising current profile.

The invention is supported by certain exemplary embodiments. It goes without saying that the person skilled in the art may consider alternative embodiments by which the current pulse shape is adapted to the relevant voltage pulse characteristic, in real time. For instance, an ignition delay time may be rounded down to full microseconds, and directly used as a pointer to address the suitable prestored current shape.

The embodiments discussed herein feature an auxiliary current $I_o$ which may have a different shape and duration than shown, or be omitted entirely.

Preferably, the discharge time $t_e$ is a fixed time (so called isoenergetic pulses, when rectangular shaped impulses are used), but this is not imperative. For instance, the discharge time $t_e$ can be controlled as a function of the pulse shape, such as to still get isoenergetic machining pulses, even when using non-rectangular shaped pulses.

On the other hand, while keeping the discharge time $t_e$ constant, the current pulse shape characteristics can be adapted such as to still get isoenergetic machining pulses, or to at least to at least partially reduce the difference of the energy of pulses. For instance, for current pulse shapes displaying a small initial slope, the current is highly increased in the course of the discharge time $t_e$ to a level above of the current of a corresponding rectangular pulse.

Moreover, the number of the prestored current pulse shapes and the number of features of the prestored current pulse shapes can be set as needed. For instance, the invention was presented using exemplarily 40 current pulse shapes. However, the advantages of the invention are already appreciable with as few as two different pulse shapes, that is, a first pulse shape with a moderate slope and a second pulse shape with a rather steep slope. In further one current pulse shape may be used by default, and one or more other may replace the default current pulse shape depending on the value of the time parameter featured by the gap voltage.

Referentials

| $t_d$ | ignition delay time, or ignition delay |
|---|---|
| $t_{dref}$ | ignition delay setpoint, for the servo control |
| OCP | oscillator clock pulse |
| $t_i$ | total pulse duration |
| $t_{d\%}$ | percentage of ignition delay ($t_d/t_i$) |
| $t_f$ | fall time |
| $t_{f100}$ | fall time expressed in 100 ns units |
| $t_o$ | pulse pause |
| $U_o$ | open circuit voltage, open voltage |
| $U_e$ | erosion-, machining-, discharge-, burning voltage |
| $I_e$ | discharge current |
| $I_0$ | auxiliary current |
| $I_{ped}$ | pedestal current |
| $t_c$ | computation time reaction time |
| $t_{ramp}$ | ramp duration |
| $dI_{ramp}$ | current slope |
| k1,k2 | fitting coefficients |
| MRR | material removal rate [mm$^3$/min] |

**Claims**

1. A method for electrical discharge machining of a workpiece by a tool electrode, wherein a plurality of discrete electrical discharge machining pulses are applied to a gap between the work piece and the tool electrode, **characterized in that**,

   - an open voltage $U_o$ is applied between the electrode and the work piece to induce a discharge;
   - a gap voltage $U_{Gap}$ is measured;
   - at least one time parameter related to the gap voltage is computed,
   - a shape characteristics of a current pulse is determined based on the determined at least one time parameter, and
   - the current pulse is generated according to the determined shape characteristics and applied to the tool electrode.

2. The method for the electrical discharge machining according to claim 1, whereas the time parameter is an ignition delay time $t_d$ and/or a fall time $t_f$.

3. The method for the electrical discharge machining according to claim 1 or 2, wherein
   the determined time parameter is normalized, in particular with reference to the pulse duration $t_i$, or with reference to a reference timeframe $T_{ff}$, preferably the normalized value of the time parameter is used as a pointer to a memory location that contains the shape characteristics of the current pulse.

4. The method for the electrical discharge machining according to claims 3, wherein a combination of normalized values of two time parameters, in particular the combination of the normalized ignition delay time $t_{d\%}$ and the normalized fall time $t_{f100}$ is used as a pointer to a memory location that contains the shape characteristics of the current pulse.

5. The method for the electrical discharge machining according to one of claims 1 to 4, wherein a defined auxiliary current $I_0$ is issued at least until the current pulse is switched on, preferably during the whole pulse.

6. The method for the electrical discharge machining according to one of claims 1 to 5, wherein an average value of the time parameter of a plurality of consecutive voltage pulses is computed and used to determine the shape characteristics of the current pulse and the determined shape characteristics is applied for a plurality of subsequent machining discharge pulses.

7. The method for the electrical discharge machining according to one of the claims 1 to 6, wherein the memory includes a set of look-up tables, in which the shape characteristics of the current pulse is stored and the look-up table is selected according to the given priority of the technological results to be achieved, in particular low wear or high material removal rate.

8. The method for the electrical discharge machining according to one of claims 1 to 7, wherein the shape characteristics of the current pulse includes a first shape feature and a second shape feature, whereas the first shape feature is a pedestal of the current pulse and the second shape feature is a ramp of the current pulse.

9. The method for the electrical discharge machining according to one of claims 8, and the first shape feature is configured to maintain the discharge and the second shape feature is configured to optimise the material removal rate and tool wear.

10. The method for the electrical discharge machining according to one of claims 1 to 9, wherein the shape features included in the look-up tables is optimized in advance by iterative erosion tests.

11. The method for the electrical discharge machining according to one of claims 1 to 10, wherein a discharge voltage $U_e$ of each electrical discharge pulses is acquired and stored, whereby front discharges are determined out of a plurality of successive discharges based on the voltage $U_{e\_front}$ of said front discharges.

12. The method for the electrical discharge machining according to one of claim 11, wherein a generator power supply voltage is adapted, as a function of the determined front discharge voltage $U_{e\_front}$ in order to be just slightly higher than the erosion voltage of the front discharges $U_{e\_front}$ but lower than the erosion voltage of the side discharges $U_{e\_side}$.

13. The method for the electrical discharge machining according to one of claims 1 to 12, wherein the machining pulses having a delay time which is longer than a set reference ignition delay $t_{d\_side}$ are cut off.

14. The method for the electrical discharge machining according to one of claims 1 to 13, wherein a dedicated current pulse (exemplarily less energetic) for discharges longer than a set reference ignition delay $t_{d\_side}$ is issued.

15. The method for the electrical discharge machining according to one of claims 1 to 14, wherein the discharge machining is a die-sinking electrical discharge machine, a wire electrical discharge machine or a fast-wire electrical discharge machine.

16. A machine tool for electrical discharge machining of a workpiece by a tool electrode including a power generator and a control unit, wherein a plurality of discrete electrical discharge machining pulses are applied to a gap between the work piece and the tool electrode, **characterized in that**,

    - an open voltage $U_o$ is generated by the power generator and applied between the electrode and the work piece to induce a discharge;
    - a gap voltage $U_{Gap}$ is measured;
    - at least one time parameter related to the gap voltage is computed by the control unit,
    - a shape characteristics of a current pulse is determined based on the determined at least one time parameter by the control unit, and
    - the current pulse is generated according to the determined shape characteristics and applied to the tool electrode.

Figure 1a

Figure 1b

Figure 1c

Figure 2

Figure 3

Figure 4

Figure 5a

Figure 5b

Figure 6

| Look-up table | | |
|---|---|---|
| $t_{d\%1}$ | $I_{ped1}$ | $dI_{ramp1}$ |
| $t_{d\%2}$ | $I_{ped2}$ | $dI_{ramp2}$ |
| $t_{d\%3}$ | $I_{ped3}$ | $dI_{ramp3}$ |
| $t_{d\%4}$ | $I_{ped4}$ | $dI_{ramp4}$ |
| ... | ... | ... |
| ... | ... | ... |
| $t_{d\%38}$ | $I_{ped38}$ | $dI_{ramp38}$ |
| $t_{d\%39}$ | $I_{ped39}$ | $dI_{ramp39}$ |
| $t_{d\%40}$ | $I_{ped40}$ | $dI_{ramp40}$ |

Figure 7

| Look-up table | | |
|---|---|---|
| $t_{f101}$ | $I_{ped101}$ | $dI_{ramp101}$ |
| $t_{f102}$ | $I_{ped102}$ | $dI_{ramp102}$ |
| $t_{f103}$ | $I_{ped103}$ | $dI_{ramp103}$ |
| $t_{f104}$ | $I_{ped104}$ | $dI_{ramp104}$ |
| ... | ... | ... |
| ... | ... | ... |
| $t_{f138}$ | $I_{ped138}$ | $dI_{ramp138}$ |
| $t_{f139}$ | $I_{ped139}$ | $dI_{ramp139}$ |
| $t_{f140}$ | $I_{ped140}$ | $dI_{ramp140}$ |

Figure 8

| Look-up table | | |
|---|---|---|
| $WE_1$ | $I_{ped201}$ | $dI_{ramp201}$ |
| $WE_2$ | $I_{ped202}$ | $dI_{ramp202}$ |
| $WE_3$ | $I_{ped203}$ | $dI_{ramp203}$ |
| $WE_4$ | $I_{ped204}$ | $dI_{ramp204}$ |
| ... | ... | ... |
| ... | ... | ... |
| $WE_{39}$ | $I_{ped238}$ | $dI_{ramp238}$ |
| $WE_{39}$ | $I_{ped239}$ | $dI_{ramp239}$ |
| $WE_{40}$ | $I_{ped240}$ | $dI_{ramp240}$ |

Figure 9a

Figure 9b

Figure 10

Figure 11

Figure 12a

Figure 12b

Figure 12c

Figure 12d

Figure 12e

Figure 12f

Europäisches
Patentamt

European
Patent Office

Office européen
des brevets

**EUROPEAN SEARCH REPORT**

Application Number

EP 22 20 4608

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/116174 A1 (BOCCADORO MARCO [CH] ET AL) 22 May 2008 (2008-05-22) | 1,2, 13-16 | INV. B23H1/02 |
| Y | * paragraph [0008] * <br> * paragraphs [0027] – [0034] * <br> * paragraph [0053] * <br> * paragraph [0019] * | 3,4,6,7 | |
| X | US 2020/198037 A1 (TSUCHIYA YOUSUKE [JP] ET AL) 25 June 2020 (2020-06-25) <br> * paragraphs [0035], [0036] * <br> * paragraph [0054] * | 1,2 | |
| X | EP 3 235 584 A1 (FANUC CORP [JP]) 25 October 2017 (2017-10-25) <br> * paragraphs [0097], [0101] * | 1,2,14, 15 | |
| Y | US 5 276 302 A (ITOH TETSURO [US]) 4 January 1994 (1994-01-04) <br> * column 6, lines 39-47 * | 3,4,7 | |
| Y | US 2015/360310 A1 (TEE KOTLER TER PEY [AU] ET AL) 17 December 2015 (2015-12-17) <br> * paragraphs [0024] – [0027] * | 6 | TECHNICAL FIELDS SEARCHED (IPC) B23H |
| A | WECK M. ET AL: "Analysis and Adaptive Control of EDM Sinking Process Using the Ignition Delay Time and Fall Time as Parameter", <br> CIRP ANNALS., <br> vol. 41, no. 1, <br> 1 January 1992 (1992-01-01), pages 243-246, XP093041369, <br> NL, CH, FR <br> ISSN: 0007-8506, DOI: 10.1016/S0007-8506(07)61195-0 <br> * paragraph [03.1]; figure 13 * | 1,2,6,16 | |

The present search report has been drawn up for all claims

| Place of search | Date of completion of the search | Examiner |
|---|---|---|
| The Hague | 25 April 2023 | Jaeger, Hein |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

**EP 22 20 4608**

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

**see sheet B**

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

**1-4, 6, 7, 13-16**

☐ The present supplementary European search report has been drawn up for those parts of the European patent application which relate to the invention first mentioned in the claims (Rule 164 (1) EPC).

18

Europäisches
Patentamt

European
Patent Office

Office européen
des brevets

**LACK OF UNITY OF INVENTION**

**SHEET B**

Application Number

EP 22 20 4608

The Search Division considers that the present European patent application does not comply with the requirements of unity of invention and relates to several inventions or groups of inventions, namely:

1. claims: 1-4, 6, 7, 13-16

    A method and a machine tool for electrical discharge machining of a workpiece by a tool electrode, wherein a shape characteristics of a current pulse is determined based on at least one time parameter, the current pulse is generated according to the determined shape characteristics and applied to the tool electrode and wherein the determined time parameter is normalized and details thereof.
    ---

2. claim: 5

    A method for electrical discharge machining of a workpiece by a tool electrode, wherein a shape characteristics of a current pulse is determined based on at least one time parameter, the current pulse is generated according to the determined shape characteristics and applied to the tool electrode and wherein a defined auxiliary current Io is issued.
    ---

3. claims: 8-10

    A method for electrical discharge machining of a workpiece by a tool electrode, wherein a shape characteristics of a current pulse is determined based on at least one time parameter, the current pulse is generated according to the determined shape characteristics and applied to the tool electrode and wherein the shape characteristics of the current pulse includes a first shape feature and a second shape feature, wherein the first shape feature is a pedestal of the current pulse and the second shape feature is a ramp of the current pulse.
    ---

4. claims: 11, 12

    A method of electrical discharge machining of a workpiece by a tool electrode, wherein a shape characteristics of a current pulse is determined based on at least one time parameter, the current pulse is generated according to the determined shape characteristics and applied to the tool electrode and wherein front discharges are determined out of a plurality of successive discharges.
    ---

## ANNEX TO THE EUROPEAN SEARCH REPORT
## ON EUROPEAN PATENT APPLICATION NO.

EP 22 20 4608

This annex lists the patent family members relating to the patent documents cited in the above-mentioned European search report.
The members are as contained in the European Patent Office EDP file on
The European Patent Office is in no way liable for these particulars which are merely given for the purpose of information.

25-04-2023

| Patent document cited in search report | | | Publication date | Patent family member(s) | | | Publication date |
|---|---|---|---|---|---|---|---|
| US 2008116174 | A1 | | 22-05-2008 | AT | 429303 | T | 15-05-2009 |
| | | | | CN | 101176935 | A | 14-05-2008 |
| | | | | EP | 1918054 | A1 | 07-05-2008 |
| | | | | ES | 2325597 | T3 | 09-09-2009 |
| | | | | JP | 2008114362 | A | 22-05-2008 |
| | | | | US | 2008116174 | A1 | 22-05-2008 |
| US 2020198037 | A1 | | 25-06-2020 | CN | 111375852 | A | 07-07-2020 |
| | | | | EP | 3674026 | A1 | 01-07-2020 |
| | | | | JP | 6875361 | B2 | 26-05-2021 |
| | | | | JP | 2020099973 | A | 02-07-2020 |
| | | | | KR | 20200079433 | A | 03-07-2020 |
| | | | | TW | 202033296 | A | 16-09-2020 |
| | | | | US | 2020198037 | A1 | 25-06-2020 |
| EP 3235584 | A1 | | 25-10-2017 | CN | 107297553 | A | 27-10-2017 |
| | | | | EP | 3235584 | A1 | 25-10-2017 |
| | | | | JP | 6457427 | B2 | 23-01-2019 |
| | | | | JP | 2017189860 | A | 19-10-2017 |
| | | | | KR | 20170118611 | A | 25-10-2017 |
| | | | | US | 2017297126 | A1 | 19-10-2017 |
| US 5276302 | A | | 04-01-1994 | NONE | | | |
| US 2015360310 | A1 | | 17-12-2015 | CN | 105121316 | A | 02-12-2015 |
| | | | | EP | 2951111 | A1 | 09-12-2015 |
| | | | | JP | 6311725 | B2 | 18-04-2018 |
| | | | | JP | 2016510264 | A | 07-04-2016 |
| | | | | KR | 20150114569 | A | 12-10-2015 |
| | | | | US | 2015360310 | A1 | 17-12-2015 |
| | | | | WO | 2014117226 | A1 | 07-08-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 2250872

- EP 2848349 A

**Non-patent literature cited in the description**

- **BRUYN, H.E.** Slope control: A great improvement in spark erosion. *CIRP Annals,* 1967, vol. 16 (2), 183-191

- **FRITZ KLOCKE ; WILFRIED KONIG.** Abtragen, Generieren, Laser-materialbearbeitung. Springer Verlag, 1997
- **DIRK DAUW.** *On line identification and Optimization of electro-discharge machining,* 1985